# EUROPEAN PATENT APPLICATION

(11) **EP 4 734 099 A1**
(43) Date of publication of application: **29.04.2026**
(21) Application number: 24852025.6
(22) Date of filing: 07.06.2024
(51) Int. Cl.: G09G 3/32, G09G 3/00, G06F 1/16, H04M 1/02, G09F 9/30

(54) **SLIDABLE ELECTRONIC DEVICE FOR CONTROLLING FLEXIBLE DISPLAY PANEL, METHOD THEREFOR, AND NON-TRANSITORY COMPUTER-READABLE STORAGE MEDIUM**

(30) Priority: 05.08.2023 KR 20230102513; 18.08.2023 KR 20230108636
(71) Applicant: Samsung Electronics Co., Ltd., Suwon-si, Gyeonggi-do 16677 (KR)
(72) Inventor: KIM, Jinhyun, Suwon-si Gyeonggi-do 16677 (KR); LEE, Jaesung, Suwon-si Gyeonggi-do 16677 (KR); LEE, Seunghyuck, Suwon-si Gyeonggi-do 16677 (KR)
(74) Representative: Gulde & Partner
(86) International application number: PCT/KR2024/007797
(87) International publication number: WO 2025/033667

(57) **Abstract**

The slidable electronic device may comprise a housing including a first housing part and a second housing part fastened to the first housing part. The second housing part may be configured to slide with respect to the first housing part. The slidable electronic device may comprise a flexible display panel coupled to the first housing part and the second housing part such that, as the second housing part slides with respect to the first housing part, the flexible display panel is at least partially rolled into the first housing part, thereby changing the size of an active area visible from the front side of the housing. The slidable electronic device may comprise display driving circuit inside the housing. The display driving circuit may be configured such that, in a state in which the first part of the active area is viewable from the front side, and the second part of the active area is not viewable from the front side, at least some of first light-emitting elements positioned in the first area inside the first part having round corners adjacent to the boundary between the first part and the second part emit light in order to display a screen inside the first area, and while the screen is displayed in the state, at least some of second light-emitting elements in the second area inside the first part positioned on the outer periphery of the round corners emit light during a reference time.

## Description

### [Technical Field]

The following descriptions relate to a slidable electronic device, a method, and a non-transitory computer-readable storage medium for controlling a flexible display panel.

### [Background Art]

An electronic device may include a display for providing visual information and/or visual data. The display may be deformable. For example, since the display is deformable, the display may provide a relatively wide screen or may provide a relatively compact structure.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A slidable electronic device is provided. The slidable electronic device may comprise a housing including a first housing part and a second housing part engaged with the first housing part. The second housing part may be configured to be slid with respect to the first housing part. The slidable electronic device may comprise a flexible display panel coupled to the first housing part and the second housing part so that a size of an active area visible from a front side of the housing changes by at least partially rolling into the first housing part as the second housing part is slid with respect to the first housing part. The slidable electronic device may comprise display driver circuitry in the housing. The display driver circuitry may be configured to, in a state in which a first part of the active area is visible from the front side and a second part of the active area is invisible from the front state, control at least a portion of first light emitting elements located within the first area to emit light to display a screen within a first area in the first part having rounded corners adjacent to a boundary between the first part and the second part. The display driver circuitry may be configured to, while the screen is displayed in the state, control at least a portion of second light emitting elements within a second area in the first part that is located outside of the rounded corners to emit light for reference time.

A method is provided. The method may be executed in a slidable electronic device with a housing and a flexible display panel including an active area configured to be at least partially rolled into the housing. The method may comprise, in a state in which a first part of the active area is visible from the front side and a second part of the active area is invisible from the front state, emitting light via at least a portion of first light emitting elements located within the first area to display a screen within a first area in the first part having rounded corners adjacent to a boundary between the first part and the second part. The method may comprise, while the screen is displayed in the state, emitting, for reference time, light via at least a portion of second light emitting elements within a second area in the first part that is located outside of the rounded corners.

A non-transitory computer readable storage medium is provided. The non-transitory computer readable storage medium may store one or more programs. The one or more programs may comprise instructions to, when executed by a slidable electronic device with a housing and a flexible display panel including an active area configured to be at least partially rolled into the housing, cause the slidable electronic device to, in a state in which a first part of the active area is visible from the front side and a second part of the active area is invisible from the front state, control at least a portion of first light emitting elements located within the first area to emit light to display a screen within a first area in the first part having rounded corners adjacent to a boundary between the first part and the second part. The one or more programs may comprise instructions to, when executed by the slidable electronic device, cause the slidable electronic device to, while the screen is displayed in the state, control at least a portion of second light emitting elements within a second area in the first part that is located outside of the rounded corners to emit light for reference time.

### [Description of the Drawings]

FIG. 1 illustrates an example of a state of a slidable electronic device.
FIG. 2 is a chart illustrating hysteresis in a driving transistor.
FIG. 3 is a simplified block diagram of an exemplary slidable electronic device.
FIG. 4 illustrates an exemplary method of emitting light via at least a portion of light emitting elements located outside of rounded corners of an area for displaying a screen.
FIGS. 5A, 5B, and 6 illustrate an exemplary method of adaptively emitting light via at least a portion of light emitting elements located outside of rounded corners of an area for displaying a screen.
FIG. 7 illustrates an exemplary method of periodically changing a location of at least a portion of light emitting elements emitted outside of rounded corners of an area for displaying a screen.
FIG. 8 illustrates an exemplary method of providing a gradient content through a second area located outside of rounded corners of a first area for displaying a screen.
FIG. 9 illustrates an exemplary method of adjusting transparency of a second area located outside of rounded corners of a first area for displaying a screen.
FIG. 10 illustrates an example of a multi-foldable electronic device.
FIG. 11 is a block diagram of an electronic device in a network environment according to various embodiments.
FIG. 12 is a block diagram of a display module according to various embodiments.

### [Mode for Invention]

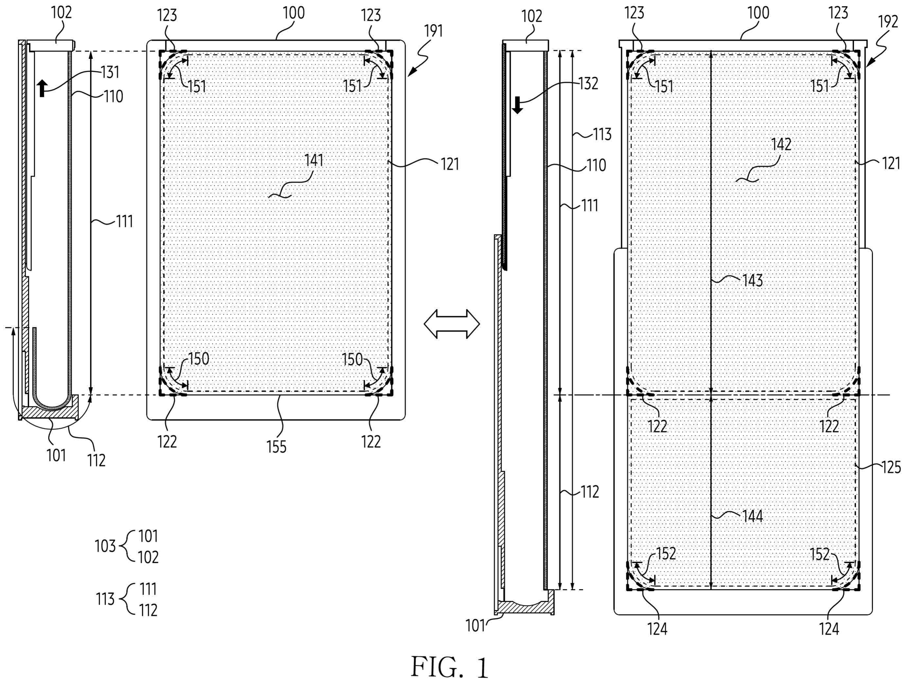

FIG. 1 illustrates an example of a state of a slidable electronic device.

Referring to FIG. 1, a slidable electronic device 100 may include a housing 103 including a first housing part 101 and a second housing part 102.

The second housing part 102 may be engaged with the first housing part 101, may be coupled to the first housing part 101, or may be connected to the first housing part 101.

The second housing part 102 may be configured to be slid with respect to the first housing part 101. For example, the second housing part 102 may be configured to be movable in a first direction 131 with respect to the first housing part 101, in the first state 191. For example, the second housing part 102 may be configured to be movable in a second direction 132 opposite to the first direction 131 with respect to the first housing part 101, in a second state 192. For example, the second housing part 102 may be engaged with the first housing part 101 to be slid with respect to the first housing part 101.

The slidable electronic device 100 may include a flexible display panel 110 forming at least a portion of a front side of the housing 103 (or the slidable electronic device 100). The at least a portion of the flexible display panel 110 may be deformable. The flexible display panel 110 may be coupled to the first housing part 101 and the second housing part 102. For example, the flexible display 110 may be coupled to the first housing part 101 and the second housing part 102 so that a size of an active area 113 visible from the front side of the housing 100 is changed by at least partially rolling into the first housing part 101 as the second housing part 102 is slid with respect to the first housing part 101. For example, in the first state 191, a first part 111 of the active area 113 may be visible from the front side, and a second part 112 of the active area 113 may be invisible from the front side. For example, in the second state 192, the first part 111 of the active area 113 may be visible from the front side, and the second part 112 of the active area 113 may be visible from the front side. As a non-limiting example, a state of the slidable electronic device 100 may include not only the first state 191 and the second state 192, but also at least one third state, which is an intermediate state between the first state 191 and the second state 192. For example, in the at least one third state, the first part 111 of the active area 113 may be visible from the front side, a portion of the second part 112 of the active area 113 may be visible from the front side, and another portion (or a remaining portion) of the second part 112 of the active area 113 may be invisible from the front side.

In the first state 191, a screen 141 may be displayed on the flexible display panel 110. For example, the screen 141 may be displayed within a first area 121 in the first part 111. A shape of the first area 121 (or the screen 141) may be a rounded rectangle. As a non-limiting example, the shape of the first area 121 may be a rounded rectangle for a beautiful curved design. The first area 121 may include rounded corners 150 and rounded corners 151. For example, unlike the rounded corners 151, the rounded corners 150 may be adjacent to a boundary 155 between the first part 111 and the second part 112. As a non-limiting example, unlike the rounded corners 151, the rounded corners 150 may extend from the boundary 155.

In the first state 191, the first part 111 may further include a second area 122. The second area 122 may be located outside of the rounded corners 150. The at least a portion of the second area 122 may be in contact with the rounded corners 150. For example, the second area 122 may be at least partially in contact with the rounded corners 150 outside the rounded corners 150. For example, the second area 122 may be located between the rounded corners 150 and the boundary 155. For example, the second area 122 may be defined by the rounded corners 150, the boundary 155, and a portion of a periphery of the first part 111 (e.g., a portion of the periphery of the first part 111 parallel to the first direction 131 (or the second direction 132) or a portion of the periphery of the first part 111 perpendicular to the boundary 155).

In the first state 191, since the second area 122 is located outside of the first area 121 used for displaying the screen 141, the second area 122 may not be an area used for providing information. As a non-limiting example, in the first state 191, the second area 122 may be an area that is not focused on by a user, unlike the first area 121. As a non-limiting example, in the first state 191, the second area 122 may be an unnoticeable area to a user, unlike the first area 121. As a non-limiting example, in the first state 191, the second area 122 may be an area in the first part 111 for a beautiful curved design of the screen 141 displayed within the first area 121.

In the first state 191, the first part 111 may further include a third area 123. The third area 123 may be located outside of the rounded corners 151. The third area 123 may be at least partially in contact with the rounded corners 151 outside the rounded corners 151.

In the second state 192, the first part 111 and the second part 112 may be visible from the front side.

In the second state 192, an extended screen 142 may be displayed on the flexible display panel 110. The extended screen 142 may include a part 143 corresponding to the screen 141 and a part 144 extended from the part 143. For example, the part 144 may provide contents that were not provided in the first state 191. For example, the part 144 may provide contents (or information) that appear in the first state 191 when the screen 141 is scrolled in the first direction 131 (or the second direction 132).

In the second state 192, the extended screen 142 may be displayed within an area including the first area 121 and a fifth area 125. For example, the first area 121 may be included in the first part 111, and the fifth area 125 may be included in the second part 112. A shape of the area including the first area 121 and the fifth area 125 may be a rounded rectangle. As a non-limiting example, a shape of the area including the first area 121 and the fifth area 125 may be a rounded rectangle for a beautiful curved design. The area including the first area 121 and the fifth area 125 may include rounded corners 151 and rounded corners 152.

In the second state 192, the second part 112 may further include a fourth area 124. The fourth area 124 may be located outside of the rounded corners 152. The at least a portion of the fourth area 124 may be in contact with the rounded corners 152. For example, the fourth area 124 may be at least partially in contact with the rounded corners 152 outside the rounded corners 152.

In the second state 192, the second area 122 may be an area used for providing information, unlike the second area 122 in the first state 191. As a non-limiting example, in the second state 192, the second area 122 may be an area focused on by a user, unlike the second area 122 in the first state 191. As a non-limiting example, in the second state 192, the second area 122 may be a noticeable area to a user, unlike the second area 122 in the first state 191.

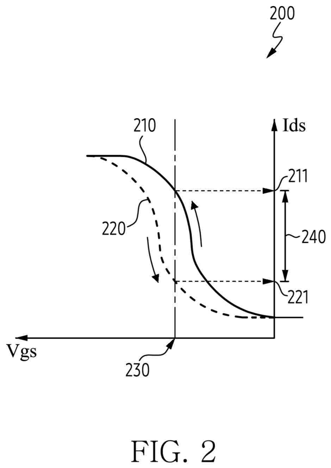

For example, assume that, while the screen 141 is displayed in the first state 191, a current is not provided to second light emitting elements (or second sub-pixels) in the second area 122 (e.g., second light emitting diodes or second OLEDs) unlike first light emitting elements (or first sub-pixels) in the first area 121 (e.g., first light emitting diodes or first organic light emitting diodes (OLEDs)). The current not being provided to each of the second light emitting elements in the first state 191 may at least temporarily cause an afterimage (image sticking, or image persistence) in the second state 192 changed from the first state 191. For example, the afterimage may be caused due to hysteresis in a driving transistor in the second sub-pixels for providing a current to each of the second light emitting elements located in the second area 122. The hysteresis is exemplified in a description of FIG. 2.

FIG. 2 is a chart illustrating hysteresis in a driving transistor.

Referring to FIG. 2, a threshold voltage of the driving transistor may be shifted when an image of a first color (e.g., black) is changed to an image of a second color (e.g., white). For example, the shifting of the threshold voltage may cause a change in luminance provided from an organic light emitting diode driven through the driving transistor.

For example, a chart 200 indicates the change. A horizontal axis of the chart 200 indicates a gate-source voltage (Vgs) of the driving transistor, and a vertical axis of the chart 200 indicates a current applied to each of the second light emitting elements (e.g., each of the second OLEDs) (or a current from a drain electrode of the driving transistor to a source electrode of the driving transistor (Ids)). For example, a line 210 in the chart 200 indicates a relationship between a gate-source voltage (Vgs) and a current (Ids) for an image of the first color, and a line 220 in the chart 200 indicates a relationship between a gate-source voltage (Vgs) and a current (Ids) for an image of the second color. As in the chart 200, the line 220 may be offset with respect to the line 210. For example, a value 211 of the current (Ids) at the line 210 when the gate-source voltage (Vgs) is a value 230 may be different from a value 221 of the current (Ids) at the line 220 when the gate-source voltage (Vgs) is the value 230. For example, a difference 240 between the value 211 and the value 221 may cause the afterimage.

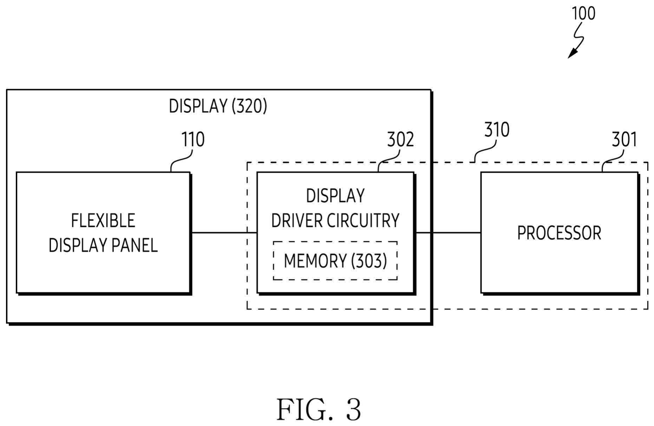

Referring back to FIG. 1, since disabling the second area 122 for the first state 191 may cause an afterimage according to a change (or switch) from the first state 191 to the second state 192 (or the at least one third state), the slidable electronic device 100 may execute operations for at least partially enabling the second area 122 for the first state 191. The operations may be executed through at least a portion of components of the slidable electronic device 100. The components are exemplified in a description of FIG. 3.

FIG. 3 is a simplified block diagram of an exemplary slidable electronic device.

Referring to FIG. 3, the slidable electronic device 100 may include a processor 301 and a display 320.

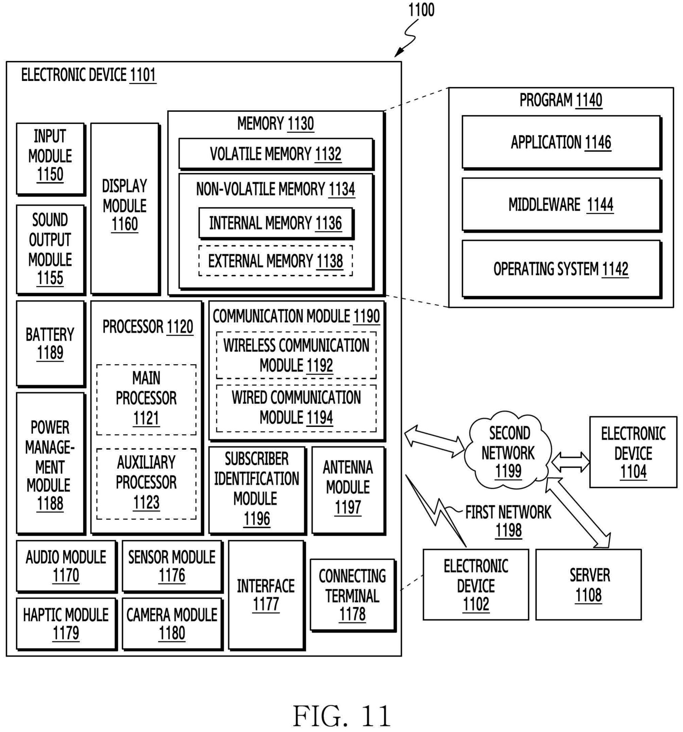

The processor 301 may include at least a portion of a processor 1120 of FIG. 11 or may correspond to at least a portion of the processor 1120 of FIG. 11. The processor 301 may include a central processing unit (CPU), a graphics processing unit (GPU), and/or a display processing unit (DPU) (or a display controller). The processor 301 may be used to process information for an image to be transmitted to display driver circuitry 302. For example, the processor 301 may be used to obtain the information. For example, the processor 301 may be used to transmit the information to the display driver circuitry 302. For example, the processor 301 may process the information for a video mode of a display serial interface (DSI) of mobile industry process interface (MIPI) alliance. For example, the processor 301 may process the information for a command mode of the DSI of the MIPI alliance. For example, the processor 301 may process the information for a hybrid video mode (e.g., a video mode executed by using memory 303 in the display driver circuitry 302) of the DSI of the MIPI alliance. The processor 301 may be located within a housing 103 (not illustrated in FIG. 3).

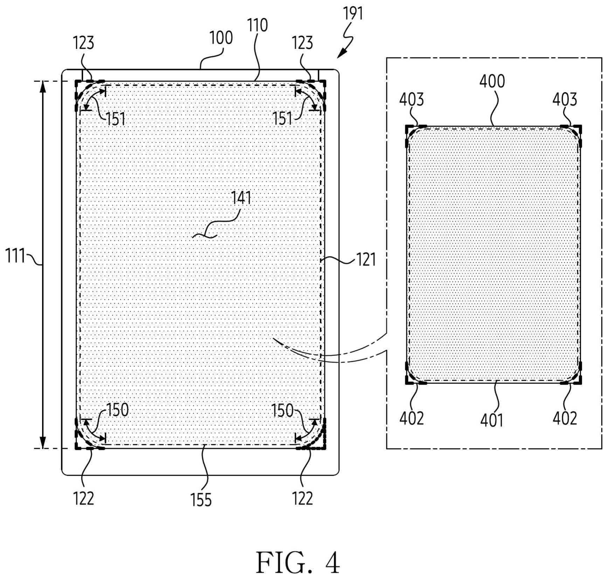

For example, the processor 301 may execute operations for reducing an occurrence of the afterimage exemplified in the descriptions of FIG. 1 and FIG. 2. The operations will be exemplified in descriptions of FIGS. 4 to 9. As a non-limiting example, at least a portion of operations of the processor 301 to be exemplified in descriptions of FIGS. 4 to 9 may be executed by the display driver circuitry 302 according to an implementation or design of the slidable electronic device 100.

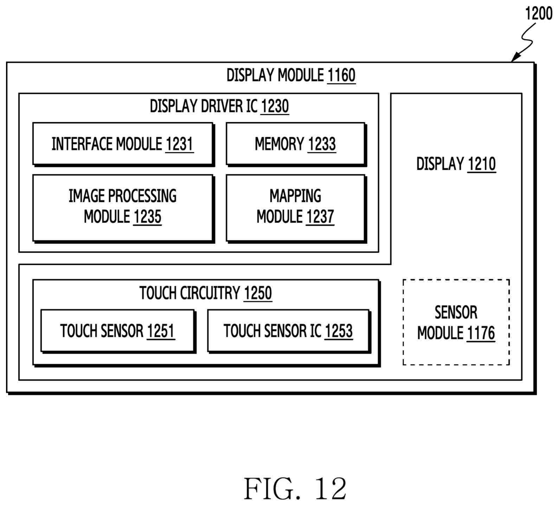

The display 320 may include display driver circuitry 302 and a flexible display panel 110. The display 320 may include at least a portion of a display module 1160 of FIGS. 11 and 12 or may correspond to at least a portion of the display module 1160 of FIGS. 11 and 12. The display driver circuitry 302 may be located within a housing 103 (not illustrated in FIG. 3).

The display driver circuitry 302 may include at least a portion of a DDI 1230 of FIG. 12 or may correspond to at least a portion of the DDI 1230 of FIG. 12. The display driver circuitry 302 may control the flexible display panel 110 to display a screen on the flexible display panel 110. For example, the display driver circuitry 302 may control at least a portion of light emitting elements in the flexible display panel 110 to emit light to display the screen. For example, the display driver circuitry 302 may provide or transmit, to the flexible display panel 110, signals for controlling the at least a portion of the light emitting elements to emit light. In this document, the display driver circuitry 302 controlling the at least a portion of the light emitting elements to emit light may indicate that the display driver circuitry 302 provides a current (or power) (or voltage) to the flexible display panel 110 to control the at least a portion of the light emitting elements to emit light. In this document, the display driver circuitry 302 controlling the at least a portion of the light emitting elements to emit light may indicate that the display driver circuitry 302 controls the flexible display panel 110 so that the at least a portion of the light emitting elements emit light.

For example, the display driver circuitry 302 may execute operations for reducing an occurrence of the afterimage exemplified in the descriptions of FIG. 1 and FIG. 2. The operations will be exemplified in descriptions of FIGS. 4 to 9. As a non-limiting example, at least a portion of operations of the display driver circuitry 302 to be exemplified in descriptions of FIGS. 4 to 9 may be executed by the processor 301 according to an implementation or design of the slidable electronic device 100. For example, according to an implementation, at least a portion of operations of the processor 301 to be exemplified in descriptions of FIGS. 4 to 9 may be executed by the display driver circuitry 302, and at least a portion of operations of the display driver circuitry 302 to be exemplified in descriptions of FIGS. 4 to 9 may be executed by the processor 301, so the processor 301 and the display driver circuitry 302 may often be referred to as at least one control circuitry 310. For example, operations of the processor 301 to be exemplified in descriptions of FIGS. 4 to 9 may be referred to as operations of the at least one control circuitry 310. For example, operations of the display driver circuitry 302 to be exemplified in descriptions of FIGS. 4 to 9 may be referred to as operations of the at least one control circuitry 310.

For example, the display driver circuitry 302 may include memory 303 for the command mode. For example, the display driver circuitry 302 may include the memory 303 for the hybrid video mode. For example, when the display driver circuitry 302 includes the memory 303, the display driver circuitry 302 may execute at least a portion of operations to be exemplified in descriptions of FIGS. 4 to 9 based on scanning an image stored in the memory 303 (e.g., an image from the processor 301). According to an implementation, the display driver circuitry 302 may not include the memory 303.

The flexible display panel 110 may include at least a portion of a display 1210 of FIG. 12 or may correspond to at least a portion of the display 1210 of FIG. 12.

For example, components (e.g., the processor 301 and the display 320) of the slidable electronic device 100 exemplified in the description of FIG. 3 may be configured to execute operations exemplified in descriptions of FIGS. 4 to 9.

FIG. 4 illustrates an exemplary method of emitting light via at least a portion of light emitting elements located outside of rounded corners of an area for displaying a screen.

Referring to FIG. 4, a first state 191 may indicate a state of the slidable electronic device 100 (or the display 320) in which a first part 111 of an active area 113 (not illustrated in FIG. 4) is visible from the front side and a second part 112 of the active area 113 is invisible from the front side. In the first state 191, the display driver circuitry 302 may control at least a portion of the first light emitting elements located in the first area 121 of the first part 111 to emit light to display a screen 141 within the first area 121.

In the first state 191, the display driver circuitry 302 may control at least a portion of the second light emitting elements in a second area 122 of the first part 111 located outside rounded corners 150 of the first area 121 adjacent to a boundary 155 between the first part 111 and the second part 112 to emit light, while the screen 141 is displayed in the first state 191.

The screen 141 being displayed in the first state 191 may include that at least a portion of the first light emitting elements is controlled to emit light (during an emission interval). The screen 141 being displayed in the first state 191 may include that the screen 141 is maintained on the flexible display panel 110, after the at least a portion of the first light emitting elements is controlled to emit light. The screen 141 being displayed in the first state 191 may include executing a scan of the display driver circuitry 302 for initially displaying the screen 141 on the flexible display panel 110 in the first state 191. The screen 141 being displayed in the first state 191 may include a scan of the display driver circuitry 302 for maintaining the screen 141 on the flexible display panel 110 in the first state 191. However, it is not limited thereto.

For example, controlling the at least a portion of the second light emitting elements in the second area 122 to emit light in the first state 191 may be executed to reduce a probability that the afterimage occurs with respect to the second area 122 according to a change from the first state 191 to a state in which the first part 111 is visible from the front side and at least a portion of the second part 112 is visible from the front side (e.g., the second state 192 (not illustrated in FIG. 4) or the at least one third state). As a non-limiting example, controlling the at least a portion of the second light emitting elements in the second area 122 to emit light in the first state 191 may be executed not for providing information but for reducing the afterimage. For example, since the second area 122 is used for displaying an extended screen 142 (not illustrated in FIG. 4) in the second state 192 changed from the first state 191, the display driver circuitry 302 may control the at least a portion of the second light emitting elements in the second area 122 to emit light in the first state 191. For example, controlling the at least a portion of the second light emitting elements in the second area 122 to emit light in the first state 191 may be executed for a reference time. As a non-limiting example, the reference time may correspond to an emission interval (or emission period) defined for the display 320 (e.g., a time corresponding to 120 hertz (Hz)).

For example, since the second area 122 in the first state 191 is not an area used for providing information, the display driver circuitry 302 may control the at least a portion of the second light emitting elements in the second area 122 to emit light in the first state 191 so that the second area 122 is unnoticeable to a user.

As a non-limiting example, in the first state 191, the display driver circuitry 302 may control the at least a portion of the second light emitting elements in the second area 122 to emit light based on synchronization signals (e.g., a vertical synchronization signal, a horizontal synchronization signal, and/or an emission synchronization signal) used for displaying the screen 141 in the first area 121. As a non-limiting example, in the first state 191, the display driver circuitry 302 may control the at least a portion of the second light emitting elements in the second area 122 to emit light, in response to a timing distinguished from timings defined by the synchronization signals.

As a non-limiting example, in the first state 191, the display driver circuitry 302 may receive, from the processor 301, information for an image 400. For example, a shape of the image 400 may be a rectangle, as illustrated in FIG. 4. For example, the image 400 may not include rounded corners (e.g., the rounded corners 150 and the rounded corners 151), unlike the first area 121. For example, the image 400 may include a first portion 401 corresponding to the first area 121 and a second portion 402 corresponding to the second area 122. For example, the first portion 401 of the image 400 may include contents provided by the screen 141. For example, the display driver circuitry 302 may control the at least a portion of the first light emitting elements to emit light based on the first portion 401 of the image 400 to display the screen 141 in the first area 121 in the first state 191. For example, the display driver circuitry 302 may control the at least a portion of the second light emitting elements to emit light based on the second portion 402 of the image 400 while displaying the screen 141 in the first state 191. For example, in the first state 191, the display driver circuitry 302 may control the at least a portion of the second light emitting elements to emit light instead of masking the second portion 402 of the image 400 to display the screen 141 in the first area 121. As a non-limiting example, since the second portion 402 of the image 400 may be used for displaying in the second area 122 in the second state 192, controlling the at least a portion of the second light emitting elements to emit light based on the second portion 402 of the image 400 may reduce a probability that the afterimage occurs.

For example, the image 400 may further include a third portion 403 corresponding to a third area 123. For example, since the third area 123 is not an area used for displaying information regardless of a change from the first state 191 to the second state 192, the display driver circuitry 302 may mask the third portion 403 of the image 400 to refrain from controlling third light emitting elements located in the third area 123 to emit light. However, it is not limited thereto. For example, the display driver circuitry 302 may control the at least a portion of the third light emitting elements to emit light to display the screen 141 in the first area 191.

For example, the at least a portion of the second light emitting elements in the first state 191 may be controlled to emit light based on gamma correction for the second portion 402 of the image 400. For example, a degree (or extent, or level) of gamma correction executed for the first portion 401 of the image 400 may be different from a degree (or extent, or level) of gamma correction executed for the second portion 402 of the image 400. For example, the gamma correction for the second portion 402 of the image 400 may be executed by the processor 301 before the processor 301 transmits the information (e.g., information for the image 400) to the display driver circuitry 302. For example, the gamma correction for the second portion 402 of the image 400 may be executed by the display driver circuitry 302 after the display driver circuitry 302 receives the information from the processor 301.

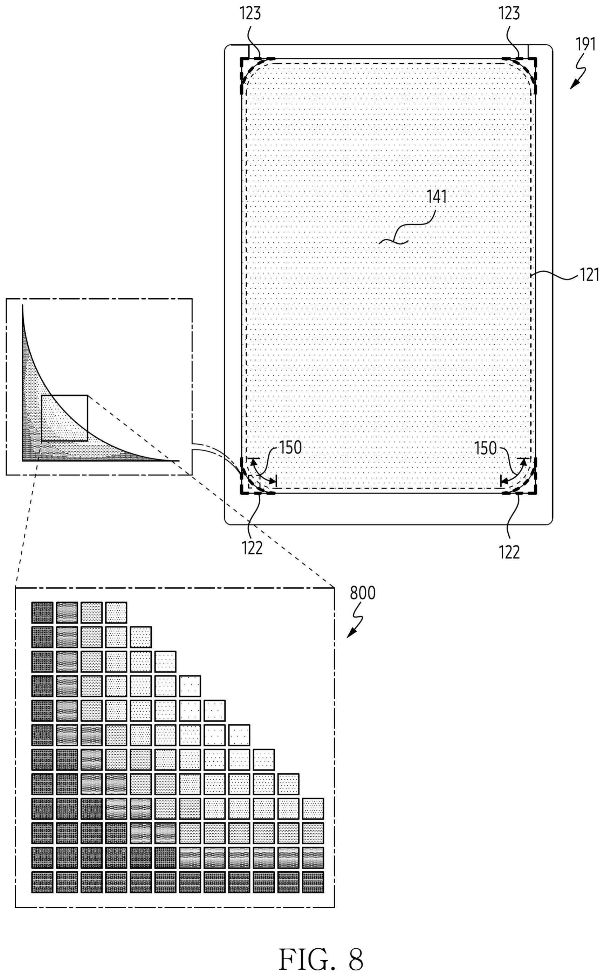

For example, the display driver circuitry 302 may control the at least a portion of the second light emitting elements to emit light in the first state 191 to provide a gradient content having slightly different grayscale values (or pixel value) (or gray level) (or grayscale level) (or brightness value) (or brightness level) (or luminance) (or luminance value) (or luminance level) in a content of the second portion 402 of the image 400, in at least a portion of the second area 122. For example, the gradient content may be obtained by the processor 301 or may be obtained by the display driver circuitry 302. For example, the gradient content provided in the second area 122 in the first state 191 may be obtained based on applying a gradation effect to the second portion 402 of the image 400. The gradation effect will be exemplified in a description of FIG. 8.

For example, the at least a portion of the second light emitting elements in the first state 191 may be controlled to emit light based on adjustment of transparency of the second portion 402 of the image 400. For example, the adjustment of the transparency may be executed by the processor 301 before the processor 301 transmits the information (e.g., the information for the image 400) to the display driver circuitry 302. For example, the adjustment of the transparency may be executed by the display driver circuitry 302 after the display driver circuitry 302 receives the information.

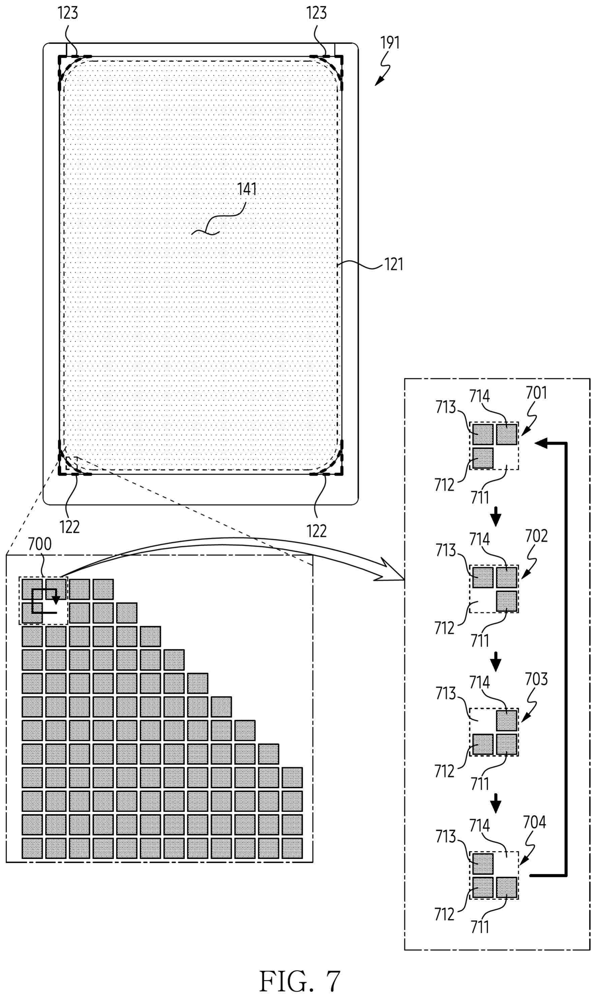

For example, the display driver circuitry 302 may periodically change a location of the at least a portion of the second light emitting elements controlled to emit light while the screen 141 is displayed in the first state 191. The periodic change of the location will be exemplified in a description of FIG. 7.

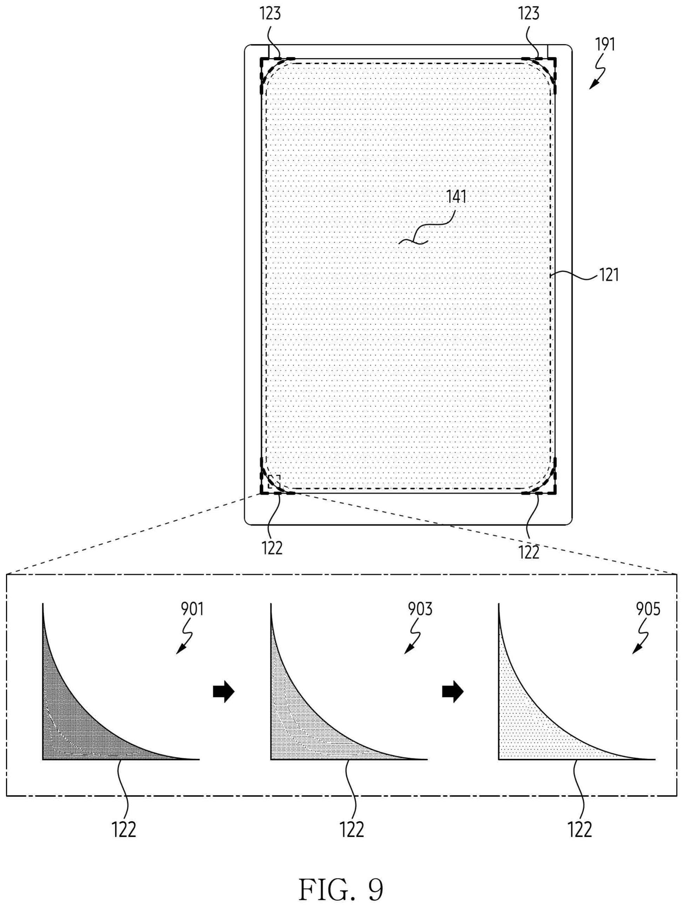

For example, the display driver circuitry 302 may control the at least a portion of the second light emitting elements to emit light while the screen 141 is displayed in the first state 191 to change overall transparency of a content provided in the second area 122. The change of the transparency will be exemplified in a description of FIG. 9.

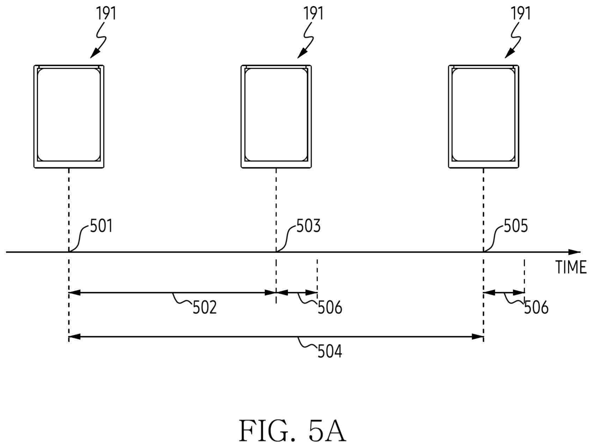

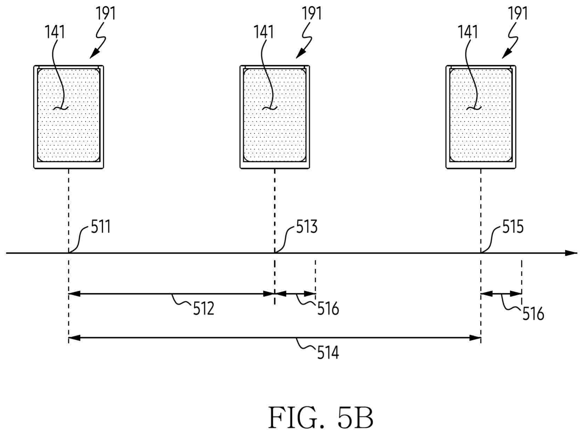

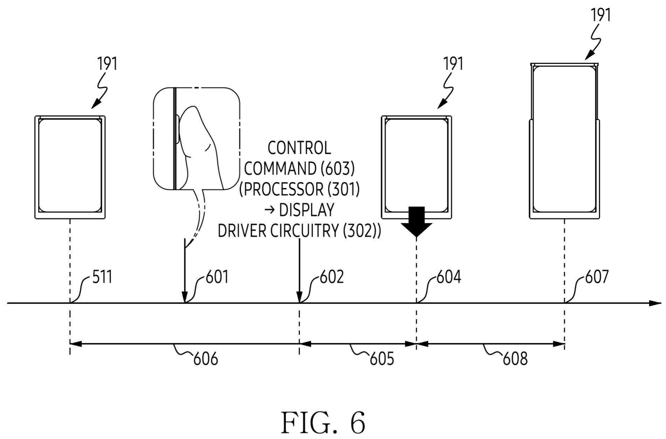

For example, the display driver circuitry 302 may adaptively change a technique for controlling the at least a portion of the second light emitting elements to emit light based on a length of time during which the screen 141 is displayed in the first state 191. For example, the display driver circuitry 302 may adaptively change a technique for controlling the at least a portion of the second light emitting elements to emit light based on a length of time during which the first state 191 is maintained. For example, the display driver circuitry 302 may adaptively change a technique for controlling the at least a portion of the second light emitting elements to emit light based on a user input that causes a change from the first state 191 to another state in which the first part 111 is visible from the front side and at least a portion of the second part 112 is visible from the front side (e.g., the second state 192 or the at least one third state). The adaptive changes of the technique are exemplified in descriptions of FIGS. 5A, 5B, and 6.

FIGS. 5A, 5B, and 6 illustrate an exemplary method of adaptively emitting light via at least a portion of light emitting elements located outside of rounded corners of an area for displaying a screen.

Referring to FIG. 5A, the display driver circuitry 302 may adaptively change a technique for controlling the at least a portion of the second light emitting elements to emit light based on a length of time during which the first state 191 is maintained.

For example, the display driver circuitry 302 may change the number of the at least a portion of the second light emitting elements controlled to emit light in the first state 191, based on the length of the time during which the first state 191 is maintained. For example, the display driver circuitry 302 may increase the number of the at least a portion of the second light emitting elements controlled to emit light in the first state 191 as the length becomes longer. The number of the at least a portion of the second light emitting elements may be increased until the number reaches a reference number. For example, the reference number may be set in the slidable electronic device 100 so that a user does not notice that light is emitted via the at least a portion of the second light emitting elements.

For example, the display driver circuitry 302 may change a transparency of a content provided in the second area 122 according to controlling the at least a portion of the second light emitting elements to emit light based on the length of the time during which the first state 191 is maintained. For example, the display driver circuitry 302 may increase a transparency of a content provided in the second area 122 as the length becomes longer. For example, the transparency may be increased until the transparency reaches a reference transparency. For example, the reference transparency may be set in the slidable electronic device 100 so that a user does not notice that light is emitted via the at least a portion of the second light emitting elements.

For example, the display driver circuitry 302 may change an area to which a gradation effect is applied to the second area 122 according to controlling the at least a portion of the second light emitting elements to emit light based on the length of the time during which the first state 191 is maintained. For example, the display driver circuitry 302 may expand the area as the length becomes longer.

For example, the display driver circuitry 302 may change brightness values (or grayscale values) used for applying the gradation effect, based on the length of the time during which the first state 191 is maintained. For example, the display driver circuitry 302 may increase brightness values of at least a portion of the second area 122 to which the gradation effect is applied, as the length becomes longer.

For example, the display driver circuitry 302 may change a length of a period for changing a location of the at least a portion of the second light emitting elements controlled to emit light while the screen 141 is displayed in the first state 191, based on the length of the time during which the first state 191 is maintained. For example, the display driver circuitry 302 may decrease the length of the period as the length becomes longer. For example, the length of the period may be decreased until the length reaches a reference length. For example, the reference length may be set in the slidable electronic device 100 so that a user does not notice that light is emitted via the at least a portion of the second light emitting elements.

For example, the display driver circuitry 302 may change a length of a period for changing a transparency of a content provided in the second area 122 according to controlling the at least a portion of the second light emitting elements to emit light, based on the length of the time during which the first state 191 is maintained. For example, the display driver circuitry 302 may decrease the length of the period as the length becomes longer. For example, the length of the period may be decreased until the length reaches a reference length. For example, the reference length may be set in the slidable electronic device 100 so that a user does not notice that light is emitted via the at least a portion of the second light emitting elements.

For example, the first state 191 may start at a timing 501. For example, since the display driver circuitry 302 adaptively changes a technique for controlling the at least a portion of the second light emitting elements to emit light based on a length of a time during which the first state 191 is maintained, a technique for controlling the at least a portion of the second light emitting elements to emit light at a timing 503 after a time 502 from the timing 501 may be at least partially different from a technique for controlling the at least a portion of the second light emitting elements to emit light at a timing 505 after a time 504 from the timing 501.

For example, the number of the at least a portion of the second light emitting elements controlled to emit light at the timing 503 may be smaller than the number of the at least a portion of the second light emitting elements controlled to emit light at the timing 505. For example, a transparency (e.g., 30 percent(%)) of content provided in accordance with the at least a portion of the second light emitting elements controlled to emit light at the timing 503 may be smaller than a transparency (e.g., 70 %) of content provided in accordance with the at least a portion of the second light emitting elements controlled to emit light at the timing 505.

For example, an area to which a gradation effect is applied to the second area 122 according to controlling the at least a portion of the second light emitting elements to emit light in the second area 122 at the timing 503 may be narrower than an area to which a gradation effect is applied to the second area 122 according to controlling the at least a portion of the second light emitting elements to emit light in the second area 122 at the timing 505.

For example, the second area 122 having a gradation effect applied according to controlling the at least a portion of the second light emitting elements to emit light in the second area 122 at the timing 503 may be darker than the second area 122 having a gradation effect applied according to controlling the at least a portion of the second light emitting elements to emit light in the second area 122 at the timing 505.

For example, a length of a period for changing a location of the at least a portion of the second light emitting elements controlled to emit light for a time 506 from the timing 503 may be longer than a length of a period for changing a location of the at least a portion of the second light emitting elements controlled to emit light for the time 506 from the timing 505.

For example, a length of a period for changing a transparency of content provided in the second area 122 by the at least a portion of the second light emitting elements controlled to emit light for the time 506 from the timing 503 may be longer than a length of a period for changing a transparency of content provided in the second area 122 by the at least a portion of the second light emitting elements controlled to emit light for the time 506 from the timing 505.

Referring to FIG. 5B, the display driver circuitry 302 may adaptively change a technique for controlling the at least a portion of the second light emitting elements to emit light, based on a length of a time during which the screen 141 is displayed in the first state 191.

For example, the display driver circuitry 302 may change the number of the at least a portion of the second light emitting elements controlled to emit light in the first state 191, based on the length of the time during which the screen 141 is displayed in the first state 191. For example, the display driver circuitry 302 may increase the number of the at least a portion of the second light emitting elements controlled to emit light in the first state 191 as the length becomes longer. The number of the at least a portion of the second light emitting elements may be increased until the number reaches a reference number. For example, the reference number may be set in the slidable electronic device 100 so that a user does not notice that light is emitted via the at least a portion of the second light emitting elements.

For example, the display driver circuitry 302 may change a transparency of content provided in the second area 122 according to controlling the at least a portion of the second light emitting elements to emit light, based on the length of the time during which the screen 141 is displayed in the first state 191. For example, the display driver circuitry 302 may increase a transparency of content provided in the second area 122 as the length becomes longer. For example, the transparency may be increased until the transparency reaches a reference transparency. For example, the reference transparency may be set in the slidable electronic device 100 so that a user does not notice that light is emitted via the at least a portion of the second light emitting elements.

For example, the display driver circuitry 302 may change an area to which a gradation effect is applied to the second area 122 according to controlling the at least a portion of the second light emitting elements to emit light, based on the length of the time during which the screen 141 is displayed in the first state 191. For example, the display driver circuitry 302 may expand the area as the length becomes longer.

For example, the display driver circuitry 302 may change brightness values (or grayscale values) used for applying the gradation effect, based on the length of the time during which the screen 141 is displayed in the first state 191. For example, the display driver circuitry 302 may increase brightness values of at least a portion of the second area 122 to which the gradation effect is applied, as the length becomes longer.

For example, the display driver circuitry 302 may change a length of a period for changing a location of the at least a portion of the second light emitting elements controlled to emit light while the screen 141 is displayed in the first state 191, based on the length of the time during which the screen 141 is displayed in the first state 191. For example, the display driver circuitry 302 may decrease the length of the period as the length becomes longer. For example, the length of the period may be decreased until the length reaches a reference length. For example, the reference length may be set in the slidable electronic device 100 so that a user does not notice that light is emitted via the at least a portion of the second light emitting elements.

For example, the display driver circuitry 302 may change a length of a period for changing a transparency (or overall transparency) of content provided in the second area 122 according to controlling the at least a portion of the second light emitting elements to emit light, based on the length of the time during which the screen 141 is displayed in the first state 191. For example, the display driver circuitry 302 may decrease the length of the period as the length becomes longer. For example, the length of the period may be decreased until the length reaches a reference length. For example, the reference length may be set in the slidable electronic device 100 so that a user does not notice that light is emitted via the at least a portion of the second light emitting elements.

For example, an initial display of the screen 141 in the first state 191 may start at a timing 511. For example, since the display driver circuitry 302 adaptively changes a technique for controlling the at least a portion of the second light emitting elements to emit light based on a length of a time during which the screen 141 is displayed in the first state 191, a technique for controlling the at least a portion of the second light emitting elements to emit light at a timing 513 after a time 512 from the timing 511 may be at least partially different from a technique for controlling the at least a portion of the second light emitting elements to emit light at a timing 515 after a time 514 from the timing 511.

For example, the number of the at least a portion of the second light emitting elements controlled to emit light at the timing 513 may be smaller than the number of the at least a portion of the second light emitting elements controlled to emit light at the timing 515. For example, a transparency of content (e.g., 30 %) provided in accordance with the at least a portion of the second light emitting elements controlled to emit light at the timing 513 may be smaller than a transparency of content (e.g., 70 %) provided in accordance with the at least a portion of the second light emitting elements controlled to emit light at the timing 515.

For example, an area to which a gradation effect is applied to the second area 122 according to controlling the at least a portion of the second light emitting elements to emit light in the second area 122 at the timing 513 may be narrower than an area to which a gradation effect is applied to the second area 122 according to controlling the at least a portion of the second light emitting elements to emit light in the second area 122 at the timing 515.

For example, the second area 122 having a gradation effect applied according to controlling the at least a portion of the second light emitting elements to emit light in the second area 122 at the timing 513 may be darker than the second area 122 having a gradation effect applied according to controlling the at least a portion of the second light emitting elements to emit light in the second area 122 at the timing 515.

For example, a length of a period for changing a location of the at least a portion of the second light emitting elements controlled to emit light for a time 516 from the timing 513 may be longer than a length of a period for changing a location of the at least a portion of the second light emitting elements controlled to emit light for the time 516 from the timing 515.

For example, a length of a period for changing a transparency of content provided in the second area 122 by the at least a portion of the second light emitting elements controlled to emit light for the time 516 from the timing 513 may be longer than a length of a period for changing a transparency of content provided in the second area 122 by the at least a portion of the second light emitting elements controlled to emit light for the time 516 from the timing 515.

A technique for controlling the at least a portion of the second light emitting elements to emit light may be adaptively changed in response to a user input.

Referring to FIG. 6, in the first state 191, a user input 600 may be received for the slidable electronic device 100 at a timing 601. The user input 600 may cause a change from the first state 191 to a state in which the first part 111 and at least a portion of the second part 112 are visible from the front side (e.g., the second state 192 or the at least one third state). For example, as illustrated in FIG. 6, the user input 600 may include pressing a physical button, used for extending the flexible display panel 110, protruded through a portion of the housing 103. For example, the user input 600 may include contacting an input means (e.g., finger) onto the physical button. For example, the user input 600 may include changing a state of the slidable electronic device 100 to a grip state. For example, the user input 600 may include receiving a signal requesting an extension of the flexible display panel 110 from an external electronic device (e.g., a device associated with the slidable electronic device 100). For example, the signal may be transmitted from the external electronic device to the slidable electronic device 100, based on a user input caused for the external electronic device.

For example, the processor 301 may detect, identify, or receive the user input 600. For example, the processor 301 may transmit, to the display driver circuitry 302, a control signal 603 (or a control command 603) at a timing 602, in response to the user input 600.

For example, a change from the first state 191 to a state in which the first part 111 and at least a portion of the second part 112 are visible from the front side (e.g., the second state 192 or the at least one third state) may be initiated at a timing 604. As a non-limiting example, the control signal 603 may be transmitted from the processor 301 to the display driver circuitry 302 before the change is initiated (or before the timing 604).

For example, the display driver circuitry 302 may control the at least a portion of the second light emitting elements to emit light in a time interval 605 between the timing 602 (or a timing at which the control signal 603 is received by the display driver circuitry 302) and the timing 604, based on a second technique different from a first technique for controlling the at least a portion of the second light emitting elements to emit light in a time interval 606 before the timing 602. For example, the display driver circuitry 302 may change a technique for controlling the at least a portion of the second light emitting elements to emit light from the first technique to the second technique, in response to the control signal 603.

For example, the number of the at least a portion of the second light emitting elements controlled to emit light during the time interval 605 may be greater than the number of the at least a portion of the second light emitting elements controlled to emit light during the time interval 606. For example, a transparency (or overall transparency) of content provided in the second area 122 according to controlling the at least a portion of the second light emitting elements to emit light during the time interval 605 may be greater than a transparency of content provided in the second area 122 according to controlling the at least a portion of the second light emitting elements to emit light during the time interval 606. For example, an area to which a gradation effect is applied to the second area 122 according to controlling the at least a portion of the second light emitting elements to emit light during the time interval 605 may be wider than an area to which a gradation effect is applied to the second area 122 according to controlling the at least a portion of the second light emitting elements to emit light during the time interval 606. For example, the second area 122 having a gradation effect applied according to controlling the at least a portion of the second light emitting elements to emit light during the time interval 605 may be brighter than the second area 122 having a gradation effect applied according to controlling the at least a portion of the second light emitting elements to emit light during the time interval 606. For example, a length of a period for changing a location of the at least a portion of the second light emitting elements controlled to emit light during the time interval 605 may be shorter than a length of a period for changing a location of the at least a portion of the second light emitting elements controlled to emit light during the time interval 606. A length of a period for changing a transparency of content provided in the second area 122 by the at least a portion of the second light emitting elements controlled to emit light during the time interval 605 may be shorter than a length of a period for changing a transparency of content provided in the second area 122 by the at least a portion of the second light emitting elements controlled to emit light during the time interval 606.

As a non-limiting example, the processor 301 may control or cause the display driver circuitry 302 to change a refresh rate of a screen displayed on the flexible display panel 110 to a second refresh rate (e.g., 120 Hz) higher than a first refresh rate (e.g., 60 Hz) used in the first state 191, during a time interval 608 between the timing 604 and a timing 607. For example, the timing 607 may be a timing at which a change from the first state 191 to a state in which the first part 111 and at least a portion of the second part 112 are visible from the front side (e.g., the second state 192 or the at least one third state) is completed (or terminated).

For example, the processor 301 may control or cause the display driver circuitry 302 to decrease an overall brightness of a screen displayed on the flexible display panel 110 during the time interval 608.

For example, the processor 301 may control or cause the display driver circuitry 302 to display a content to be displayed in the second area 122 in the second state 192 during the time interval 608.

For example, changing the first refresh rate to the second refresh rate and displaying the content in the second area 122 may be executed during the time interval 608 to reduce a probability that the afterimage occurs with respect to the second area 122 in the second state 192. For example, decreasing the overall brightness may be executed during the time interval 608 to reduce a probability that the afterimage caused for the second area 122 during a change from the first state 191 to the second state 192 is visible to a user.

Referring back to FIG. 4, as described above, the display driver circuitry 302 may change a location of the at least a portion of the second light emitting elements controlled to emit light while the screen 141 is displayed in the first state 191. The change of the location is exemplified in a description of FIG. 7.

FIG. 7 illustrates an exemplary method of periodically changing a location of at least a portion of light emitting elements emitted outside of rounded corners of an area for displaying a screen.

Referring to FIG. 7, the second light emitting elements located in the second area 122 may be classified into a plurality of sets. For example, the plurality of sets may be used for changing a location of the at least a portion of the second light emitting elements controlled to emit light while the screen 141 is displayed in the first state 191.

As a non-limiting example, a set 700 among the plurality of sets may include a light emitting element 711, a light emitting element 712, a light emitting element 713, and a light emitting element 714, which are a portion of the second light emitting elements. The light emitting element 711, the light emitting element 712, the light emitting element 713, and the light emitting element 714 may be controlled to sequentially emit light according to a setting of the slidable electronic device 100 (or a setting of the display 320), while the screen 141 is displayed in the first state 191. For example, as in a state 701 of the set 700, the display driver circuitry 302 may control the flexible display panel 110 to emit light via the light emitting element 711 among the light emitting element 711, the light emitting element 712, the light emitting element 713, and the light emitting element 714 in the set 700 for the reference time. For example, the display driver circuitry 302 may control the flexible display panel 110 to change the state 701 of the set 700 to a state 702 of the set 700 in which the light emitting element 712 among the light emitting element 711, the light emitting element 712, the light emitting element 713, and the light emitting element 714 in the set 700 is controlled to emit light for the reference time. For example, the display driver circuitry 302 may control the flexible display panel 110 to change the state 702 of the set 700 to a state 703 of the set 700 in which the light emitting element 713 among the light emitting element 711, the light emitting element 712, the light emitting element 713, and the light emitting element 714 in the set 700 is controlled to emit light for the reference time. For example, the display driver circuitry 302 may control the flexible display panel 110 to change the state 703 of the set 700 to a state 704 of the set 700 in which the light emitting element 714 among the light emitting element 711, the light emitting element 712, the light emitting element 713, and the light emitting element 714 in the set 700 is controlled to emit light for the reference time. For example, the display driver circuitry 302 may control the flexible display panel 110 to change the state 704 of the set 700 to the state 701 of the set 700. For example, the display driver circuitry 302 may control the flexible display panel 110 to repeatedly execute a change of states of the set 700 while the screen 141 is displayed in the first state 191.

Although not illustrated in FIG. 7, controlling each of the light emitting element 711, the light emitting element 712, the light emitting element 713, and the light emitting element 714 to emit light may be executed based on the second portion 402 of the image 400 of FIG. 4. For example, controlling each of the light emitting element 711, the light emitting element 712, the light emitting element 713, and the light emitting element 714 to emit light may be executed based on partially adjusting a transparency of the second portion 402 of the image 400.

Although not illustrated in FIG. 7, the display driver circuitry 302 may control the flexible display panel 110 so that a state of a portion of the plurality of sets, different from the set 700, are changed identically or similarly to a change of the state of the set 700.

A method of classifying the second light emitting elements located in the second area 122 into a plurality of sets may be variously implemented. For example, the plurality of sets may be classified based on distances from each of the rounded corners 150. For example, a first set among the plurality of sets may include a first portion of the second light emitting elements whose distances from each of the rounded corners 150 are within a first range, and a second set among the plurality of sets may include a second portion of the second light emitting elements whose distances from each of the rounded corners 150 are within a second range. The second range may not overlap the first range.

As described above, the display driver circuitry 302 may reduce a probability that the afterimage occurs, by moving the at least a portion of the second light emitting elements controlled to emit light while the screen 141 is displayed in the first state 191. For example, the display driver circuitry 302 may move the at least a portion of the second light emitting elements controlled to emit light while the screen 141 is displayed in the first state 191 so that controlling the at least a portion of the second light emitting elements to emit light is unnoticeable to a user.

Referring back to FIG. 4, as described above, the display driver circuitry 302 may provide a gradation effect in at least a portion of the second area 122, by using the at least a portion of the second light emitting elements controlled to emit light while the screen 141 is displayed in the first state 191. The gradation effect is exemplified in a description of FIG. 8.

FIG. 8 illustrates an exemplary method of providing a gradient content through a second area located outside of rounded corners of a first area for displaying a screen.

Referring to FIG. 8, the display driver circuitry 302 may control the at least a portion of the second light emitting elements to emit light while the screen 141 is displayed in the first state 191 to provide, in the second area 122, a gradient content having slightly different grayscale values in a content of the second portion 402 of the image 400 (not illustrated in FIG. 9) received from the processor 301. For example, the display driver circuitry 302 may control the at least a portion of the second light emitting elements to emit light while the screen 141 is displayed in the first state 191 to provide at least a portion of the second area 122 having a gradation effect (or a gradient effect). For example, the at least a portion of the second light emitting elements may be controlled to emit light for the reference time.

For example, as in a state 800, at least a portion of the second area 122 may have a gradation effect in which it becomes gradually brighter as it becomes closer to the rounded corners 150, according to controlling the at least a portion of the second light emitting elements to emit light.

For example, the gradation effect may be provided based on gamma correction regarding the second portion 402 of the image 400 (not illustrated in FIG. 4) and/or adjustment of transparency regarding the second portion 402 of the image 400.

As a non-limiting example, an area of the at least a portion of the second area 122 having the gradation effect may be changed according to a time during which the first state 191 is maintained, a time during which the screen 141 is maintained, and/or a reception of a user input that causes a change of the first state 191 to another state.

Although not illustrated in FIG. 8, as a non-limiting example, at least another portion (or a remaining portion) of the second area 122 may not have a gradation effect, unlike at least a portion of the second area 122.

Information for providing the gradient content exemplified in the description of FIG. 8 may be stored in the memory 303 or may be stored in other memory (e.g., auxiliary memory) in the display driver circuitry 302. For example, the display driver circuitry 302 may provide the gradient content superimposed on the second portion 402 of the image 400 (or the gradient content overlaid on the second portion 402 of the image 400), based on the information.

Referring back to FIG. 4, as described above, the display driver circuitry 302 may control the at least a portion of the second light emitting elements to emit light so that a transparency of the second area 122 is overall adjusted while the screen 141 is displayed in the first state 191. The overall adjustment of the transparency of the second area 122 is exemplified in a description of FIG. 9.

FIG. 9 illustrates an exemplary method of adjusting transparency of a second area located outside of rounded corners of a first area for displaying a screen.

Referring to FIG. 9, the display driver circuitry 302 may control the at least a portion of the second light emitting elements to emit light so that a transparency of the second area 122 is overall adjusted while the screen 141 is displayed in the first state 191. For example, the display driver circuitry 302 may control at least a portion of the second light emitting elements to emit light for the reference time so that the second area 122 has a first transparency (e.g., 10 %), as in a state 901. For example, the display driver circuitry 302 may change the state 901 to a state 903 in which the second area 122 has a second transparency (e.g., 40 %) while the screen 141 is displayed in the first state 191. For example, the display driver circuitry 302 may change the state 903 to a state 905 in which the second area 122 has a third transparency (e.g., 70 %) while the screen 141 is displayed in the first state 191. For example, the display driver circuitry 302 may change the state 905 to the state 901 while the screen 141 is displayed in the first state 191. For example, the display driver circuitry 302 may control the flexible display panel 110 to repeatedly execute a change of states of the second area 122 while the screen 141 is displayed in the first state 191.

As a non-limiting example, a period of a change of the state of the second area 122 indicated through the state 901, the state 903, and the state 905 may be changed, based on a time during which the first state 191 is maintained, a time during which the screen 141 is maintained, and/or a reception of a user input that causes a change of the first state 191 to another state.

As a non-limiting example, changing overall transparency of the second area 122 may be executed based on the second portion 402 of the image 400 (not illustrated in FIG. 9).

Information for providing one or more states (e.g., the state 901, the state 903, and/or the state 905) exemplified in the description of FIG. 9 may be stored in the memory 303 or may be stored in other memory (e.g., auxiliary memory) in the display driver circuitry 302. For example, the display driver circuitry 302 may provide the one or more states, based on the information.

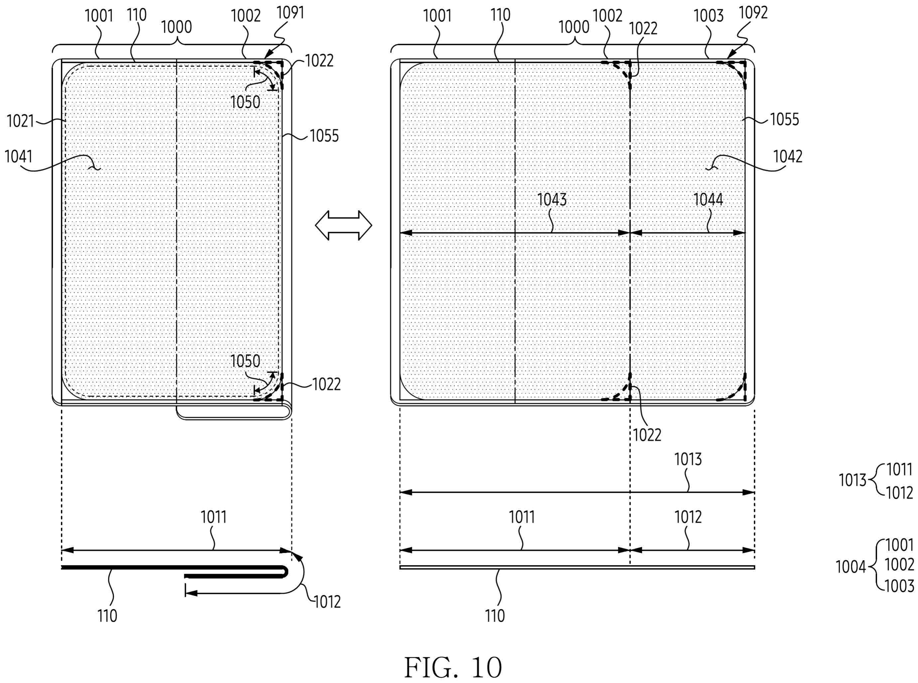

The operations of the slidable electronic device 100 exemplified above may be executed in a multi-foldable electronic device. The multi-foldable electronic device is exemplified in a description of FIG. 10.

FIG. 10 illustrates an example of a multi-foldable electronic device.

Referring to FIG. 10, a multi-foldable electronic device 1000 may include a processor 301 (not illustrated in FIG. 10) and a display 320 (not illustrated in FIG. 10), like the electronic device 100.

The multi-foldable electronic device 1000 may include a housing 1004 including a first housing part 1001, a second housing part 1002, and a third housing part 1003.

The second housing part 1002 may be engaged with each of the first housing part 1001 and the third housing part 1003, may be coupled to each of the first housing part 1001 and the third housing part 1003, or may be connected to each of the first housing part 1001 and the third housing part 1003.

The second housing part 1002 may be configured to be rotated with respect to the first housing part 1001. For example, the second housing part 1002 may be engaged with the first housing part 1001 to be rotated with respect to the first housing part 1001.

The third housing part 1003 may be engaged with the second housing part 1002, may be coupled to the second housing part 1002, or may be connected to the second housing part 1002.

The third housing part 1003 may be configured to be rotated with respect to the second housing part 1002. For example, the third housing part 1003 may be engaged with the second housing part 1002 to be rotated with respect to the second housing part 1002.

The multi-foldable electronic device 1000 may include a flexible display panel 110 forming at least a portion of a front side of the housing 1004. At least a portion of the flexible display panel 110 may be deformable. For example, the flexible display panel 110 may be coupled to the first housing part 1001, the second housing part 1002, and the third housing part 1003 so that a size of an active area 1013 visible from the front side is changed as the second housing part 1002 is rotated with respect to the first housing part 1001. For example, the flexible display panel 110 may be coupled to the first housing part 1001, the second housing part 1002, and the third housing part 1003 so that a size of the active area 1013 visible from the front side is changed as the third housing part 1003 is rotated with respect to the second housing part 1002. For example, in a first state 1091, a first part 1011 of the active area 1013 may be visible from the front side, and a second part 1012 of the active area 1013 may be invisible from the front side. For example, in the first state 1091, the second part 1012 of the active area 1013 may be visible from a rear side of the housing 1004. For example, in a second state 1092, the first part 1011 of the active area 1013 and the second part 1012 of the active area 1013 may be visible from the front side. As a non-limiting example, a state of the multi-foldable electronic device 1000 may further include not only the first state 1091 and the second state 1092, but also a third state in which the first part 1011 of the active area 1013 substantially faces the second part 1012 of the active area 1013.

In the first state 1091, a screen 1041 may be displayed on the flexible display panel 110. For example, the screen 1041 may be displayed within a first area 1021 in the first part 1011. A shape of the first area 1021 (or the screen 1041) may be a rounded rectangle. As a non-limiting example, the shape of the first area 1021 may be a rounded rectangle for a beautiful curved design. The first area 1021 may include rounded corners 1050. For example, the rounded corners 1050 may be adjacent to a boundary 1055 between the first part 1011 and the second part 1012. As a non-limiting example, the rounded corners 1050 may extend from the boundary 1055.

In the first state 1091, the first part 1011 may further include a second area 1022. The second area 1022 may be located outside of the rounded corners 1050. At least a portion of the second area 1022 may be in contact with the rounded corners 1050. For example, the second area 1022 may be at least partially in contact with the rounded corners 1050 outside the rounded corners 1050. For example, the second area 1022 may be located between the rounded corners 1050 and the boundary 1055. For example, the second area 1022 may be defined by the rounded corners 1050, the boundary 1055, and a portion of a periphery of the first part 1011.

In the first state 1091, since the second area 1022 is located outside of the first area 1021 used for displaying the screen 1041, the second area 1022 may not be an area used for providing information. As a non-limiting example, in the first state 1091, unlike the first area 1021, the second area 1022 may be an area not focused on by a user. As a non-limiting example, in the first state 1091, unlike the first area 1021, the second area 1022 may be an unnoticeable area to a user. As a non-limiting example, in the first state 1091, the second area 1022 may be an area in the first part 1011 for a beautiful curved design of the screen 1041 displayed within the first area 1021.

In the second state 1092, the first part 1011 and the second part 1012 may be visible from the front side.

In the second state 1092, an extended screen 1042 may be displayed on the flexible display panel 110. The extended screen 1042 may include a part 1043 corresponding to the screen 1041 and a part 1044 extended from the part 1043. For example, the part 1044 may provide contents that were not provided in the first state 1091. For example, the part 1044 may provide contents (or information) that appear in the first state 1091 when the screen 1041 is scrolled.

In the second state 1092, a shape of the extended screen 1042 may be a rounded rectangle. The second area 1022 in the second state 1092 may be an area used for providing information, unlike the second area 1092 in the first state 1091. As a non-limiting example, the second area 1022 in the second state 1092 may be an area focused on by a user, unlike the second area 1022 in the first state 1091. As a non-limiting example, the second area 1022 in the second state 1092 may be a noticeable area to a user, unlike the second area 1022 in the first state 1091. For example, in the second state 1092 changed from the first state 1091, the afterimage exemplified in the description of FIG. 2 may be caused.

For example, since disabling the second area 1022 during the first state 1091 may cause an afterimage according to a change from the first state 1091 to the second state 1092, the multi-foldable electronic device 1000 may execute operations for at least partially enabling the second area 1022 during the first state 1091. For example, the operations of the display driver circuitry 302 exemplified in the descriptions of FIGS. 3 to 9 and the operations of the processor 301 exemplified in the descriptions of FIGS. 3 to 9 may be caused or executed in the multi-foldable electronic device 1000.

FIG. 10 illustrates the multi-foldable electronic device 1000 in which the second part 1012 is in contact with a rear side of the second housing part 1002 (e.g., a Z-type multi-foldable electronic device), but this is merely exemplary. The descriptions of FIGS. 3 to 9 may be applied to a G-type multi-foldable electronic device. For example, a first part of an active area of the flexible display panel 110 forming at least a portion of a front side of the second housing part 1002 may face a second part of the active area of the flexible display panel 110 forming at least a portion of a front side of the third housing part 1003. In this case, an area such as the second area 1022 may be included in a third part of the active area of the flexible display panel 110 forming at least a portion of a front side of the first housing part 1001. For example, while the first part and the second part are invisible and the third part is visible, the operations of the display driver circuitry 302 exemplified in the descriptions of FIGS. 3 to 9 and the operations of the processor 301 exemplified in the descriptions of FIGS. 3 to 9 may be caused or executed in the G-type multi-foldable electronic device.

The operations of the slidable electronic device 100 exemplified above and the operations of the multi-foldable electronic device 1000 exemplified above may be executed by the components of the electronic device 1101 exemplified in the descriptions of FIGS. 11 and 12.

FIG. 11 is a block diagram illustrating an electronic device 1101 in a network environment 1100 according to various embodiments. Referring to FIG. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to an embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, an HDMI connector, a USB connector, an SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to an embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 1164dB or less) for implementing mMTC, or U-plane latency (e.g., 0.5ms or less for each of downlink (DL) and uplink (UL), or a round trip of 11ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

FIG. 12 is a block diagram 1200 illustrating the display module 1160 according to various embodiments. Referring to FIG. 12, the display module 1160 may include a display 1210 and a display driver integrated circuit (DDI) 1230 to control the display 1210. The DDI 1230 may include an interface module 1231, memory 1233 (e.g., buffer memory), an image processing module 1235, or a mapping module 1237. The DDI 1230 may receive image information that contains image data or an image control signal corresponding to a command to control the image data from another component of the electronic device 1101 via the interface module 1231. For example, according to an embodiment, the image information may be received from the processor 1120 (e.g., the main processor 1121 (e.g., an application processor)) or the auxiliary processor 1123 (e.g., a graphics processing unit) operated independently from the function of the main processor 1121. The DDI 1230 may communicate, for example, with touch circuitry 1250 or the sensor module 1176 via the interface module 1231. The DDI 1230 may also store at least part of the received image information in the memory 1233, for example, on a frame by frame basis. The image processing module 1235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1210. The mapping module 1237 may generate a voltage value or a current value corresponding to the image data pre-processed or post-processed by the image processing module 1235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1210 may be driven, for example, based at least in part on the voltage value or the current value such that visual information (e.g., a text, an image, or an icon) corresponding to the image data may be displayed via the display 1210.

According to an embodiment, the display module 1160 may further include the touch circuitry 1250. The touch circuitry 1250 may include a touch sensor 1251 and a touch sensor IC 1253 to control the touch sensor 1251. The touch sensor IC 1253 may control the touch sensor 1251 to sense a touch input or a hovering input with respect to a certain position on the display 1210. To achieve this, for example, the touch sensor 1251 may detect (e.g., measure) a change in a signal (e.g., a voltage, a quantity of light, a resistance, or a quantity of one or more electric charges) corresponding to the certain position on the display 1210. The touch circuitry 1250 may provide input information (e.g., a position, an area, a pressure, or a time) indicative of the touch input or the hovering input detected via the touch sensor 1251 to the processor 1120. According to an embodiment, at least part (e.g., the touch sensor IC 1253) of the touch circuitry 1250 may be formed as part of the display 1210 or the DDI 1230, or as part of another component (e.g., the auxiliary processor 1123) disposed outside the display module 1160.

According to an embodiment, the display module 1160 may further include at least one sensor (e.g., a fingerprint sensor, an iris sensor, a pressure sensor, or an illuminance sensor) of the sensor module 1176 or a control circuit for the at least one sensor. In such a case, the at least one sensor or the control circuit for the at least one sensor may be embedded in one portion of a component (e.g., the display 1210, the DDI 1230, or the touch circuitry 1250)) of the display module 1160. For example, when the sensor module 1176 embedded in the display module 1160 includes a biometric sensor (e.g., a fingerprint sensor), the biometric sensor may obtain biometric information (e.g., a fingerprint image) corresponding to a touch input received via a portion of the display 1210. As another example, when the sensor module 1176 embedded in the display module 1160 includes a pressure sensor, the pressure sensor may obtain pressure information corresponding to a touch input received via a partial or whole area of the display 1210. According to an embodiment, the touch sensor 1251 or the sensor module 1176 may be disposed between pixels in a pixel layer of the display 1210, or over or under the pixel layer.

Operations of the components of the slidable electronic device 100 described above may be represented as follows.

For example, a slidable electronic device (e.g., the sliding electronic device 100) may comprise a housing (e.g., the housing 103) including a first housing part (e.g., the first housing part 101) and a second housing part (e.g., the second housing part 102) engaged with the first housing part. The second housing part may be configured to be slid with respect to the first housing part. The slidable electronic device may comprise a flexible display panel (e.g., the flexible display panel 110) coupled to the first housing part and the second housing part so that a size of an active area visible from a front side of the housing changes by at least partially rolling into the first housing part as the second housing part is slid with respect to the first housing part. The slidable electronic device may comprise display driver circuitry (e.g., display driver circuitry 302) in the housing. The display driver circuitry may be configured to, in a state in which a first part of the active area is visible from the front side and a second part of the active area is invisible from the front state, control at least a portion of first light emitting elements located within the first area to emit light to display a screen within a first area in the first part having rounded corners adjacent to a boundary between the first part and the second part. The display driver circuitry may be configured to, while the screen is displayed in the state, control at least a portion of second light emitting elements within a second area in the first part that is located outside of the rounded corners to emit light for reference time.

For example, the display driver circuitry may be configured to, after the state is changed to another state in which the first part is visible from the front side and at least a portion of the second part is visible from the front side, control light emitting elements including the first light emitting elements and the second light emitting elements to emit light to display an extended screen.

For example, the display driver circuitry may be configured to, control the at least a portion of the second light emitting elements to emit light while the screen is displayed in the state to reduce an afterimage caused by the second light emitting elements used for displaying the extended screen in accordance with change to the other state.

For example, the display driver circuitry may be configured to periodically change a location of the at least a portion of the second light emitting elements controlled to emit light while the screen is displayed in the state.

For example, the slidable electronic device may comprise a processor (e.g., the processor 301) in the housing. The display driver circuitry may be configured to receive, from the processor, information for the image, control, in the state, the at least a portion of the first light emitting elements to emit light based on a portion of the image to display the screen within the first area, and control, while the screen is displayed in the state, the at least a portion of the second light emitting elements to emit light based on another portion of the image.

For example, the at least a portion of the second light emitting elements may be controlled to emit light based on gamma correction regarding the other portion of the image.

For example, the gamma correction may be executed by the processor, before the processor transmits the information to the display driver circuitry.

For example, the gamma correction may be executed by the display driver circuitry, after the display driver circuitry receives the information from the processor.

For example, the display driver circuitry may be configured to control the at least a portion of the second light emitting elements to emit light to provide a gradient content having slightly different grayscale values in a content of the other portion of the image received from the processor.

For example, the at least a portion of the second light emitting elements may be controlled to emit light based on adjustment of transparency of the other portion of the image.

For example, the adjustment of the transparency may be executed by the processor, before the processor transmits the information to the display driver circuitry.

For example, the adjustment of the transparency may be executed by the display driver circuitry, after the display driver circuitry receives the information from the processor.

For example, the display driver circuitry may be configured to control the at least a portion of the second light emitting elements to emit light based on periodically changing overall transparency of the other portion of the image, while the screen is displayed in the state.

For example, the display driver circuitry may be configured to increase the number of the at least a portion of the second light emitting elements controlled to emit light while the screen is displayed in the state, based on a length of a time during which the screen is displayed in the state.

For example, the display driver circuitry may be configured to increase transparency of a content provided in the second area according to controlling the at least a portion of the second light emitting elements to emit light, based on a length of a time during which the screen is displayed in the state.

For example, the processor may be configured to receive a user input that causes a change of the state to another state in which the first part is visible from the front side and at least a portion of the second part is visible from the front side, and transmit a control command or a control signal to the display driver circuitry in response to the user input before the state is changed to the other state.

For example, the display driver circuitry may be configured to receive the control command or the control signal from the processor, and increase the number of the at least a portion of the second light emitting elements controlled to emit light while the screen is displayed in the state, according to the control command or the control signal, before the state is changed to the other state.

For example, the display driver circuitry may be configured to receive the control command or the control signal from the processor, and increase transparency of a content provided in the second area according to controlling the at least a portion of the second light emitting elements to emit light in accordance with the control command or the control signal, before the state is changed to the other state.

For example, the above-described method may be executed in a slidable electronic device with a housing and a flexible display panel including an active area configured to be at least partially rolled into the housing. The method may comprise, in a state in which a first part of the active area is visible from the front side and a second part of the active area is invisible from the front state, emitting light via at least a portion of first light emitting elements located within the first area to display a screen within a first area in the first part having rounded corners adjacent to a boundary between the first part and the second part. The method may comprise, while the screen is displayed in the state, emitting, for reference time, light via at least a portion of second light emitting elements within a second area in the first part that is located outside of the rounded corners.

For example, a non-transitory computer readable storage medium may store one or more programs. The one or more programs may comprise instructions to, when executed by a slidable electronic device with a housing and a flexible display panel including an active area configured to be at least partially rolled into the housing, cause the slidable electronic device to, in a state in which a first part of the active area is visible from the front side and a second part of the active area is invisible from the front state, control at least a portion of first light emitting elements located within the first area to emit light to display a screen within a first area in the first part having rounded corners adjacent to a boundary between the first part and the second part, and while the screen is displayed in the state, control at least a portion of second light emitting elements within a second area in the first part that is located outside of the rounded corners to emit light for reference time.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A slidable electronic device comprising:
a housing including a first housing part and a second housing part engaged with the first housing part, the second housing part is configured to be slid with respect to the first housing part;
a flexible display panel coupled to the first housing part and the second housing part so that a size of an active area visible from a front side of the housing changes by at least partially rolling into the first housing part as the second housing part is slid with respect to the first housing part; and
display driver circuitry in the housing, that is configured to:
in a state in which a first part of the active area is visible from the front side and a second part of the active area is invisible from the front state, control at least a portion of first light emitting elements located within the first area to emit light to display a screen within a first area in the first part having rounded corners adjacent to a boundary between the first part and the second part; and
while the screen is displayed in the state, control at least a portion of second light emitting elements within a second area in the first part that is located outside of the rounded corners to emit light for reference time.

2. The slidable electronic device of claim 1, wherein the display driver circuitry is further configured to:
after the state is changed to another state in which the first part is visible from the front side and at least a portion of the second part is visible from the front side, control light emitting elements including the first light emitting elements and the second light emitting elements to emit light to display an extended screen.

3. The slidable electronic device of claim 2, wherein the display driver circuitry is configured to:
control the at least a portion of the second light emitting elements to emit light while the screen is displayed in the state to reduce an afterimage caused by the second light emitting elements used for displaying the extended screen in accordance with change to the other state.

4. The slidable electronic device of claim 1, wherein the display driver circuitry is further configured to periodically change a location of the at least a portion of the second light emitting elements controlled to emit light while the screen is displayed in the state.

5. The slidable electronic device of claim 1, further comprising:
a processor in the housing,
wherein the display driver circuitry is configured to:
receive, from the processor, information for the image;
control, in the state, the at least a portion of the first light emitting elements to emit light based on a portion of the image to display the screen within the first area; and
control, while the screen is displayed in the state, the at least a portion of the second light emitting elements to emit light based on another portion of the image.

6. The slidable electronic device of claim 5, wherein the at least a portion of the second light emitting elements is controlled to emit light based on gamma correction regarding the other portion of the image.

7. The slidable electronic device of claim 6, wherein the gamma correction is executed by the processor, before the processor transmits the information to the display driver circuitry.

8. The slidable electronic device of claim 6, wherein the gamma correction is executed by the display driver circuitry, after the display driver circuitry receives the information from the processor.

9. The slidable electronic device of claim 5, wherein the display driver circuitry is configured to control the at least a portion of the second light emitting elements to emit light to provide a gradient content having slightly different grayscale values in a content of the other portion of the image received from the processor.

10. The slidable electronic device of claim 5, wherein the at least a portion of the second light emitting elements is controlled to emit light based on adjustment of transparency of the other portion of the image.

11. The slidable electronic device of claim 10, wherein the adjustment of the transparency is executed by the processor, before the processor transmits the information to the display driver circuitry.

12. The slidable electronic device of claim 10, wherein the adjustment of the transparency is executed by the display driver circuitry, after the display driver circuitry receives the information from the processor.

13. The slidable electronic device of claim 5, wherein the display driver circuitry is configured to control the at least a portion of the second light emitting elements to emit light based on periodically changing overall transparency of the other portion of the image, while the screen is displayed in the state.

14. A method executed in a slidable electronic device with a housing and a flexible display panel including an active area configured to be at least partially rolled into the housing, the method comprising:
in a state in which a first part of the active area is visible from the front side and a second part of the active area is invisible from the front state, emitting light via at least a portion of first light emitting elements located within the first area to display a screen within a first area in the first part having rounded corners adjacent to a boundary between the first part and the second part; and
while the screen is displayed in the state, emitting, for reference time, light via at least a portion of second light emitting elements within a second area in the first part that is located outside of the rounded corners.

15. A non-transitory computer readable storage medium storing one or more programs, the one or more programs comprising instructions to, when executed by a slidable electronic device with a housing and a flexible display panel including an active area configured to be at least partially rolled into the housing, cause the slidable electronic device to:
in a state in which a first part of the active area is visible from the front side and a second part of the active area is invisible from the front state, control at least a portion of first light emitting elements located within the first area to emit light to display a screen within a first area in the first part having rounded corners adjacent to a boundary between the first part and the second part; and
while the screen is displayed in the state, control at least a portion of second light emitting elements within a second area in the first part that is located outside of the rounded corners to emit light for reference time.
